(19) **Europäisches Patentamt / European Patent Office / Office européen des brevets**

(11) **EP 1 997 780 A1**

(12) **EUROPEAN PATENT APPLICATION**
published in accordance with Art. 158(3) EPC

(43) Date of publication:
**03.12.2008 Bulletin 2008/49**

(21) Application number: **07707832.7**

(22) Date of filing: **31.01.2007**

(51) Int Cl.:
***C01D 7/42*** *(2006.01)*

(86) International application number:
**PCT/JP2007/051646**

(87) International publication number:
**WO 2007/108236 (27.09.2007 Gazette 2007/39)**

(84) Designated Contracting States:
**BE DE FR GB IT NL**

(30) Priority: **15.03.2006 JP 2006071191**

(71) Applicant: **Asahi Glass Company, Limited
Chiyoda-ku
Tokyo 100-8405 (JP)**

(72) Inventors:
• **HIRANO, Hachirou
  Chiyoda-ku, Tokyo 100-8405 (JP)**

• **ARIMA, Hisakazu
  Chiyoda-ku, Tokyo 100-8405 (JP)**
• **KIKUCHI, Shintarou
  Chiyoda-ku, Tokyo 100-8405 (JP)**
• **NAKASHIMA, Fumiaki
  Chiyoda-ku, Tokyo 100-8405 (JP)**
• **SAKURAI, Shigeru
  Chiyoda-ku, Tokyo 100-8405 (JP)**

(74) Representative: **Müller-Boré & Partner
Patentanwälte
Grafinger Strasse 2
81671 München (DE)**

(54) **HIGH-PURITY SODIUM HYDROGEN CARBONATE CRYSTAL GRAIN AND PROCESS FOR PRODUCING THE SAME**

(57) Sodium hydrogencarbonate crystal particles excellent in anti-caking property and anti-thermal decomposition property, and their production process, are provided.

Sodium hydrogencarbonate crystal particles whose color 1 second after dropping of a phenolphthalein solution having a predetermined composition, is R=245 to 255, G=243 to 255 and B=245 to 255 in RGB 256 tone notation. The sodium hydrogencarbonate crystal particles are produced by subjecting sodium hydrogencarbonate crystal particles to a bicarbonation treatment in a humidified carbon dioxide gas atmosphere.

**Fig. 1**

MEASURED AT A TEMPERATURE-
RISING SPEED OF 1°C/min

EP 1 997 780 A1

**Description**

TECHNICAL FIELD

The present invention relates to high purity sodium hydrogencarbonate crystal particles excellent in anti-caking property and anti-thermal decomposition property, and to a process for producing such particles.

BACKGROUND ART

Sodium hydrogencarbonate ($NaHCO_3$) is also called as baking soda, bicarbonate of soda or sodium bicarbonate, and used in the fields of pharmaceutical, food products or semiconductor industries, etc. Specifically, in pharmaceutical field, it is used as dialysate or antacid. In the field of food products, it is used as a foaming agent such as a baking powder, or as a pH adjusting agent for e.g. soft drinks. In semiconductor industry, it is used as raw material for chemicals, pH adjusting agent, treating agent for exhaust gases or blasting media, etc.

Further, particularly in Japan, it is also used as a bath additive. Further, in recent years, its industrial application has also been expanding, and its consumption for applications of blasting media or acidic gas neutralizing agent has been increasing.

Such sodium hydrogencarbonate is usually produced and packed in a form of powder or granular crystal particles, and shipped, transported, preserved and used in this form. However, crystal particles of commercially available sodium hydrogencarbonate commonly show caking property. This tendency is remarkable particularly in the rainy seasons. If caking occurs, the flowability of the particles will be low, and the handling efficiency will deteriorate remarkably in the respective steps from distribution to use, and various troubles are brought about. Thus, the caking is a serious problem which may impair the commercial value of sodium hydrogencarbonate.

Caking is known to occur in a process in which surfaces of sodium hydrogencarbonate crystal particles change to soda ash components. Sodium hydrogencarbonate is stabilized in a state of any one of anhydrous sodium carbonate ($Na_2CO_3$), sodium carbonate monohydrate ($Na_2CO_3 \cdot H_2O$), Wegsheider's salt ($Na_2CO_3 \cdot 3NaHCO_3$) and sodium sesquicarbonate ($Na_2CO_3 \cdot NaHCO_3 \cdot 2H_2O$) that is determined according to temperature, relative humidity and carbon dioxide partial pressure.

For example, in a high temperature high humidity environment such as that in a rainy season, anhydrous sodium carbonate is formed on surfaces of sodium hydrogencarbonate crystal particles, and the anhydrous sodium carbonate formed becomes sodium carbonate monohydrate or Wegsheider's salt, and finally they change to sodium sesquicarbonate to be the most stable. On the other hand, in a dry environment, it becomes Wegsheider's salt to be stable.

The reason why caking occurs in a process where surfaces of sodium hydrogencarbonate crystal particles change to soda ash components, is considered to be because volume or mass of crystal particles changes according to composition change, and crosslinking occurs between particles at their contact points.

In order to prevent caking, a baking soda having anti-caking property is proposed, wherein a part or all of surfaces of sodium hydrogencarbonate crystal particles is formed into sodium sesquicarbonate (Patent Document 1). The reason why caking property is improved by the method proposed in Patent Document 1 is because stable layer of sodium sesquicarbonate provided in advance is considered to prevent sodium hydrogencarbonate from changing to sodium sesquicarbonate on and after logistics step.

Patent Document 1: JP-A-2003-104722

DISCLOSURE OF THE INVENTION

PROBLEMS TO BE SOLVED BY THE INVENTION

However, the baking soda having anti-baking property of Patent Document 1 has not been sufficient to improve caking property. Further, the baking soda having anti-caking property of Patent Document 1 positively reduces purity of sodium hydrogencarbonate, and it is not suitable for an application of pharmaceutical or semiconductor industry in which high purity sodium hydrogencarbonate is required. Further, the treatment to change a part or all of surfaces of sodium hydrogencarbonate crystal particles, takes a long time.

Further, sodium hydrogencarbonate tends to be decomposed by heating, but in order to preserve it in a warehouse in summer time, anti-thermal decomposition property is required. However, conventional sodium hydrogencarbonate crystal particles are not sufficient in anti-thermal decomposition property.

The present invention has been made considering the above circumstances, and it is an object of the present invention to provide sodium hydrogencarbonate crystal particles excellent in anti-caking property and anti-thermal decomposition property, and to provide a process for producing such particles.

MEANS FOR SOLVING THE PROBLEMS

Based on conventional technical common knowledge that sodium hydrogencarbonate crystal particles tend to cake, techniques such as that of Patent Document 1 have been developed. However, when the present inventors have studied to achieve the above objects, it has been discovered that surfaces of sodium hydrogencarbonate crystal particles that have been considered to be of high purity, contain slight amount of soda ash component. Then, it has been discovered that by removing this slight amount of soda ash component to further purify the sodium hydrogencarbonate crystal particles more than the level that has been considered as high purity, it is possible to improve both caking property and thermal decomposition property.

Namely, the present invention employs the following constructions.

[1] High purity sodium hydrogencarbonate crystal particles characterized in that coloration of the particles does not occur for 1 second after drop of a phenolphthalein solution consisting of 1.15 mass% of phenolphthalein, 62.23 mass% of ethyl alcohol and 36.62 mass% of water, due to color change of phenolphthalein.

[2] High purity sodium hydrogencarbonate crystal particles characterized in that their color after 1 second after dropping of a phenolphthalein solution consisting of 1.15 mass% of phenolphthalein, 62.23 mass% of ethyl alcohol and 36.62 mass% of water, is R=245 to 255, G=243 to 255 and B=245 to 255 in RGB 256 tone notation.

[3] A process for producing high purity sodium hydrogencarbonate crystal particles, comprising a step of contacting sodium hydrogencarbonate crystal particles in a state that they are heated at a temperature of from 40 to 95°C with humidified carbon dioxide gas having a relative humidity of from 5 to 95% and a carbon dioxide gas partial pressure of from 0.05 to 0.5 MPa at the temperature, to carry out bicarbonation treatment of the sodium hydrogencarbonate crystal particles.

[4] The process for producing high purity sodium hydrogencarbonate crystal particles according to [3], which further comprises after the bicarbonation treatment, a step of contacting the particles with dry carbon dioxide gas having a water vapor partial pressure of at most 0.9 kPa and a carbon dioxide gas partial pressure of from 0.05 to 0.5 MPa, to carry out drying treatment.

EFFECTS OF THE INVENTION

High purity sodium hydrogencarbonate crystal particles of the present invention are excellent in anti-caking property and anti-thermal decomposition property. Further, the process for producing the high purity sodium hydrogencarbonate crystal particles of the present invention, can produce sodium hydrogencarbonate crystal particles made of sodium hydrogencarbonate having high purity even on surfaces of crystal particles, which are excellent in anti-caking property and anti-thermal decomposition property.

BRIEF DESCRIPTION OF DRAWINGS

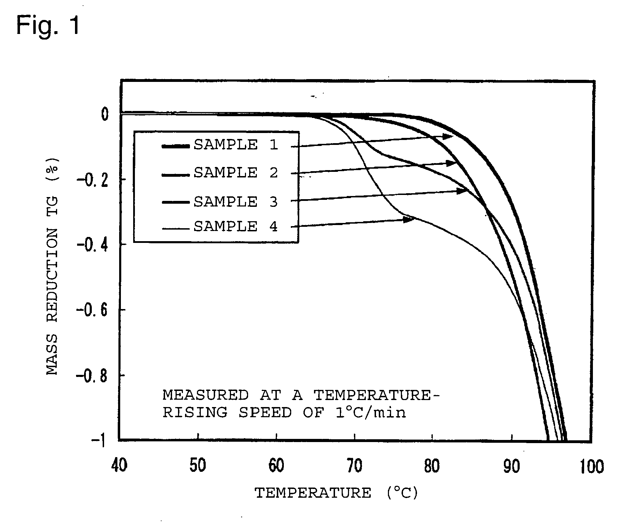

Fig. 1: A view showing test result of thermal decomposition property of sodium hydrogencarbonate.

BEST MODE FOR CARRYING OUT THE INVENTION

[High purity sodium hydrogencarbonate crystal particles]

In the high purity sodium hydrogencarbonate crystal particles of the present invention, inside and surface of the crystal particles are substantially constituted by sodium hydrogencarbonate.

Usually, since sodium hydrogencarbonate crystal particles are crystals, unless their raw material contains an impurity such as a heavy metal, potassium, calcium, magnesium or chlorine, inside of these crystal particles is substantially pure sodium hydrogencarbonate. On the other hand, their surfaces tend to be a soda ash component due to a drying step that is inevitable in their production process.

On the other hand, the high purity sodium hydrogencarbonate crystal particles of the present invention are sodium carbonate crystal particles in which not only the composition of inside of the crystal particles but also that in the vicinity of its surfaces is substantially sodium hydrogencarbonate.

As a method for measuring soda ash components on surfaces of crystal particles, a method (hereinafter referred to as "anhydrous methanol extraction method") of stirring sodium hydrogencarbonate crystal particles in an anhydrous methanol to extract components of these surfaces, and titrating the extracted solution with a hydrochloric acid solution to know what are the components, is mentioned. This method is also employed in Patent Document 1, and this method is considered to be able to detect slight amount of soda ash components with the highest precision in the current technical level.

However, by such an anhydrous methanol extraction method, it is not possible to measure Wegsheider's salt that is a soda ash component that can not be extracted into anhydrous methanol. Further, the detection limit of soda ash component other than such Wegsheider's salt, converted to sodium carbonate anhydride salt, is 0.01 mass%.

Meanwhile, the sodium hydrogencarbonate crystal particles of the present invention contain substantially no soda ash component including a Wegsheider's salt in their surfaces, and the content of soda ash component measured by the anhydrous methanol extraction method, converted to sodium carbonate anhydride salt, is less than 0.01 mass%.

Accordingly, it is not possible to identify the sodium hydrogencarbonate crystal particles of the present invention by using measurement data of anhydrous methanol extraction method.

For this reason, in order to objectively show the surface composition of the sodium hydrogencarbonate crystal particles, the present inventors have devised a method (hereinafter referred to as "PP method") of dropping aqueous-ethyl alcohol solution of phenolphthalein, and the sodium hydrogencarbonate crystal particles of the present invention are identified by this PP method.

Namely, the high purity sodium hydrogencarbonate crystal particles of the present invention are extremely high purity sodium hydrogencarbonate crystal particles which are not colored by color change of phenolphthalein for 1 sec after a phenolphthalein solution (hereinafter it may be referred to as "PP solution") consisting of 1.15 mass% of phenolphthalein, 62.23 mass% of ethyl alcohol and 36.62 mass% of water.

The PP method is specifically as follows. First of all, 5 to 20 g of a sample is put on a glass plate so as to form a cone shape, and its apex portion is squashed by a spatula so as to form a flat portion of 1 to 3 cm in diameter on the upper portion. 1 to 3 droplets of PP solution is dropped on the flat portion by using a pipette. Then, change of color tone after the drop is observed.

Phenolphthalein is alkaline, it shows red to red purple color, and its color changes according to pH in a pH region of from 8.3 to 10.0. Accordingly, when there is not coloration due to color change of phenolphthalein, pH of the PP solution in contact with the crystal particle surface is less than 8.3. Since pH exceeds 8.3 if a soda ash component is dissolved in the PP solution, no coloration of the sample crystal particles indicates that the crystal particle surface does not substantially contain soda ash components. Here, since the PP solution contains water that dissolves also a Wegsheider's salt, entire soda ash components including the Wegsheider's salt can be measured by this method.

Here, the reason of defining observation time to be within 1 second after dropping is because presence of only a slight amount of soda ash component not measurable by the anhydrous methanol extraction method, immediately causes coloration due to color change of phenolphthalein, and that the coloration is sufficiently measurable within 1 second.

Further, it is also because coloration sample occurs even if there is no soda ash component if the sample is left for too long time. This is because pH gradually increases as the sodium hydrogencarbonate component dissolved in water discharges carbon dioxide as it is decomposed.

Further, the purpose of defining the composition of PP solution as "consisting of 1.15 mass% of phenolphthalein, 62.23 mass% of ethyl alcohol and 36.62 mass% of water", is to define the factors affecting the degree of coloration within 1 second after dropping, to thereby improve the repeatability of measurement result when the content of the soda ash component in the crystal particle surface is the same.

The temperature at the measurement of PP method may be a room temperature. It is preferably from 10 to 30°C.

The high purity sodium hydrogencarbonate crystal particles of the present invention preferably do not show coloration due to color change of phenolphthalein for 5 seconds after dropping of PP solution, more preferably do not show coloration due to color change of phenolphthalein for 10 seconds. As the particles do not show coloration for longer time, the purity of the sodium hydrogencarbonate in the crystal particle surface is higher, and the particles have higher anti-caking property and anti-thermal decomposition property.

Further, in order to more objectively express that "no coloration by phenolphthalein", RGB 256 tone notation is used. Here, RGB values represent mixture ratio of elementary colors of RGB expression system, and the RGB expression system is a color expression method of expressing a color as a mixture obtained by adding three mutually independent elementary colors (R, G, B).

Namely, the color of the sodium hydrogencarbonate crystal particles of the present invention, 1 sec after dropping the PP solution is, in RGB 256 tone notation, R=245 to 255, G=243 to 255 and B=245 to 255. Hereinafter, it is simply described as "R=245 to 255, G=243 to 255 and B=245 to 255".

In RGB 256 tone notation, G value decreases as coloration of PP solution becomes dense. When G is at least 243, it is confirmed that substantially no soda ash component is present.

RGB 256 tone may be evaluated indirectly from other indications. For example, color No. 601 of a color sample "Color Fan" of GE Kikaku Center Inc. (published on February 27, 2000, ISBN4-921062-03-X) corresponds to R=255, G=242 and B=255 in RGB 256 tone notation. Further, the color No. 602 corresponds to R=255, G=230 and B=255 in RGB 256 tone notation. Accordingly, when a sample has a color tone thinner than the color No. 601, the sample satisfies the criterion that R=245 to 255, G=243 to 255 and B=245 to 255.

Besides this method, conversion to RGB 256 tone is possible from evaluation of such an index as process color value or hexadecimal value for HTML. Here, according to the color sample "Color Fan", the color No. 601 corresponds to a process color value of C=0, M=5 and Y=0, and to a hexadecimal value for HTML (web color chart) of R=FF, G=F2 and B=FF. Meanwhile, the color No. 602 corresponds to a process color value of C=0, M=10 and Y=0, and to a hexadecimal value for HTML of R=FF, G=E6 and B=FF. Accordingly, when this color sample is used and if the sample has a color tone thinner than that of color No. 601, the sample satisfies a criterion that C=0, Y=0 and M<5 in process color value, or a criterion that R=FF, B=FF and G>F3 in hexadecimal value for HTML.

The high purity sodium hydrogencarbonate crystal particles of the present invention are preferably present as substantially single crystal particles since the effects of anti-caking property is significant. Judgment of single crystal particles or not is possible by visual observation, but it can be easily judged by using an optical microscope. Here, substantially single crystal particles means that the ratio of particles not agglomerated is at least 70%, more preferably at least 80%, further preferably at least 90%.

The shape of the high purity sodium hydrogencarbonate crystal particles of the present invention is not particularly limited, but it is preferably a plate shape, a cubic shape or a column shape since these shapes increase effect of anti-caking property. The shape of the sodium hydrogencarbonate crystal particles of the present invention or the shape of its agglomerated product can be judged by observation using an optical microscope or a scanning electron microscope.

High purity sodium hydrogencarbonate crystal particles of the present invention provide, regardless of their average particle size, an effect of improving anti-caking property and anti-thermal decomposition property. Here, the average particle size means a mass-based average particle size, which is defined as a particle size at which a mass-based accumulated particle size distribution becomes 50%. Specifically, a screening method according to JIS Z8801-1 (hereinafter referred to as "screening method") using a low-tap type screening machine is used to measure the average particle size.

In order to exhibit the effect of anti-caking property of the present invention, the average particle size is preferably from 5 to 500 $\mu$m, more preferably from 10 to 300 $\mu$m. If the average particle size exceeds 500 $\mu$m, the effect of the mass of crystals becomes significant and the crystal becomes easily collapsed by gravity, and the contribution of the effect of the present invention tends to be relatively decreased.

On the other hand, when the average particle size becomes less than 10 $\mu$m, the crystals tends to be agglomerated by the effect of inter particle force such as Van der Waals force, and further, since contact points between particles per a unit volume of particles increases, the particles tends to be easily caked, and thus, the effect of the present invention decreases in some cases.

The high purity sodium hydrogencarbonate crystal particles of the present invention are excellent in anti-caking property and anti-thermal decomposition property. This is considered to be because the crystal surface being a starting point of decomposition is made of high purity sodium hydrogencarbonate having high crystallinity and is thermodynamically stable. Namely, the high purity sodium hydrogencarbonate crystal particles of the present invention have higher activation energy required to change to soda ash component as compared with conventional sodium hydrogencarbonate crystal particles, and thus, caking at the time of change is suppressed. Further, the high purity sodium hydrogencarbonate crystal particles of the present invention have higher activation energy for decomposition as compared with conventional sodium hydrogencarbonate crystal particles, and accordingly, they are considered to be not easily decomposed even when they are heated.

For example, excellent anti-thermal decomposition property of the particles at a time of heating in a nitrogen gas, can be confirmed by confirming their high activation energy by the method of Takeo Ozawa described in a paper of Takeo Ozawa, "A New Method of Analyzing Thermogravimetric Data", in Bull. Chem. Soc. Japan 38, 1881 (1965).

[Process for producing high purity sodium hydrogencarbonate crystal particles]

The high purity sodium hydrogencarbonate crystal particles of the present invention can be produced by carrying out bicarbonation treatment in which sodium hydrogencarbonate crystal particles (hereinafter it may be referred to as "raw material crystal particles") are contacted with humidified carbon dioxide gas. Further, by drying the product after the bicarbonation treatment, it is possible to produce a product of powder form.

(Raw material crystal particles)

Raw material crystal particles to be used in the present invention may be in wet or dry powder form. The amount of moisture when it is wet is preferably at most 30 mass% based on the mass of dry product. When the product contains large amount of water and is in a slurry form, agglomerated particles tend to be formed in subsequent treatments, such being not preferred.

As to be described later, in the process for producing raw material crystal particles, after sodium hydrogencarbonate crystal particles are separated as crystals, solid-liquid separation is carried out to obtain wet sodium hydrogencarbonate crystal particles as an intermediate product, and it is dried.

When the raw material crystal particles are wet, a drying step of its process and the process of the present invention can be carried out as a single series of process, and accordingly, the manufacturing process can be simplified. Further, since wet sodium hydrogencarbonate being an intermediate product is employed without drying, energy consumed in the manufacturing process can be reduced.

Further, a commercial powder-form sodium hydrogencarbonate can also be used as the raw material crystal particles.

Here, the production process of the present invention includes a process of humidifying the powder-form raw material crystal particles so as to have a water content of preferably at most 40 mass%, more preferably at most 30 mass% based on its dry product, and subsequently subjecting the humidified raw material crystal particles to a humidified carbon dioxide gas treatment.

Namely, the raw material crystal particles may be a commercial powder-form sodium hydrogencarbonate produced by a conventional process, or an intermediate product in the production process of the sodium hydrogencarbonate crystal particles.

The wet raw material crystal particles may be produced by a normal process for producing sodium hydrogencarbonate crystal particles. For example, by flowing carbon dioxide gas through an aqueous solution of sodium hydroxide or sodium carbonate, a slurry in which crystals of sodium hydrogencarbonate are separated is obtained (crystallization step), and by carrying out solid-liquid separation of the slurry by filtering or centrifugation, wet sodium hydrogencarbonate crystal particles are obtained (solid-liquid separation step). Here, the carbon dioxide gas used for the crystallization step may be used in circulation.

Sodium hydroxide or sodium carbonate and carbon dioxide gas used in this step are preferably ones containing as little impurities as possible. They may be purified for use as the case requires.

The impurities include heavy metals such as iron or lead, arsenic, chlorides such as sodium chloride, sulfuric ions, sulfur, potassium, calcium, magnesium, strontium and organic chemical materials.

Sodium hydroxide obtained by electrolysis using ion exchange membrane is preferred as the raw material since it has high purity. In terms of the purification method, solid impurities may be removed by e.g. precision filtering from liquid raw materials (sodium hydroxide aqueous solution and sodium carbonate aqueous solution) and gas raw material (carbon dioxide gas). Further, impurities present as ions in the liquid raw material may be solidified as hydroxides or sulfides and removed by e.g. precision filtering. Impurities present as gases in the gas raw material may be removed by contacting the gas raw material with a thin aqueous solution of sodium carbonate by e.g. a scrubber, or by making the impurities be adsorbed to an activated carbon or a zeolite.

The water content in sodium hydrogencarbonate crystal particles after the solid-liquid separation step based on dry product, is preferably 10 mass%, more preferably at most 5 mass%, particularly preferably about 3 mass%.

As the water content is low, it becomes possible to more effectively prevent soda ash component in the matrix liquid from adhering to crystal particles of sodium hydrogencarbonate, and accordingly, it becomes easy to obtain high purity crystal particles of sodium hydrogencarbonate. Particularly, when the water content is about 3 mass%, it is possible to substantially eliminate the influence of matrix solution and to reduce the energy required for drying.

It is preferred to carry out rinsing with water (cake rinse) after the solid-liquid separation. By this step, it is possible to remove aqueous solution (hereinafter it may be referred to as "matrix solution") of sodium hydrogencarbonate and sodium carbonate adhered to the sodium hydrogencarbonate crystal particles.

Commercial powder-form sodium hydrogencarbonate is a product obtained by the above process and further subjected to a drying treatment.

In the drying treatment, as described in Soda Handbook (published by Japan Soda Industry Association, January 30, 1975, p. 105 to 106), it is preferred to mix carbon dioxide gas into a material to suppress decomposition. Further, United States Chemical association monograph series "MANUFACTURE OF SODA" 2nd edition, section XVIII, Manufacture of Refined Sodium Bicarbonate, p. 282 (published by Reinhold Publishing, 1942) shows that air may be used instead of carbon dioxide gas in the drying step.

Commercial powder-form sodium hydrogencarbonate is a product classified or pulverized to have desired powder conditions suitable for a purpose of use.

(Bicarbonation treatment)

Bicarbonation treatment is a treatment to alter a soda ash component on surfaces of raw material crystal particles to sodium hydrogencarbonate. The bicarbonation treatment is carried out by making the raw material crystal particles heated at a temperature of from 40 to 95°C, with a humidified carbon dioxide gas having a relative humidity of from 5 to 95% at the temperature and having a carbon dioxide gas partial pressure of from 0.05 to 0.5 MPa (the humidified carbon dioxide gas is flown through the raw material crystal particles).

Here, the temperature of the raw material crystal particles during the treatment is more preferably from 50 to 90°C, further preferably from 60 to 80°C.

As the temperature is higher, reaction of changing the soda ash component to sodium hydrogencarbonate progresses more quickly. Meanwhile, by controlling the temperature to prevent it from becoming too high, it is possible to suppress decomposition of the sodium hydrogencarbonate during the bicarbonation treatment. If the temperature is too high, the partial pressure of carbon dioxide gas needs to be increased and for this purpose, the treatment equipment needs to have higher withstanding pressure, such being not preferred.

Further, the relative humidity of the humidified carbon dioxide gas at the temperature of the raw material crystal particles during the treatment, is more preferably from 10 to 90%, further preferably from 15 to 88%.

As the relative humidity is higher, the reaction to change the soda ash component to sodium hydrogencarbonate progresses more quickly. Meanwhile, by controlling the relative humidity to be not too high, it is possible to suppress dew condensation inside the treatment equipment or in pipes connected to the treatment equipment.

Further, the carbon dioxide gas partial pressure is preferably from 0.06 to 0.3 MPa, more preferably from 0.07 to 0.1 MPa.

As the carbon dioxide gas partial pressure is higher, the reaction to change the soda ash component to sodium hydrogen carbonate progresses more quickly. Meanwhile, by controlling the carbon dioxide gas partial pressure to be not too high, it is possible to avoid cost up for modifying treatment equipment or pipes connected with the treatment equipment to have higher withstanding pressure.

Into the humidified carbon dioxide gas, another gas may be mixed so long as the gas does not react with sodium hydrogencarbonate. For example, air, nitrogen or oxygen may be mixed. On the other hand, an acidic gas such as hydrogen chloride gas or a sulfur oxide gas, should not be mixed since they react with sodium hydrogencarbonate.

The treatment time is preferably from 20 min to 10 hours, more preferably from 30 min to 5 hours. As the treatment time is longer, the reaction of changing the soda ash component to sodium hydrogencarbonate can be progress more sufficiently. On the other hand, by controlling the treatment time not too long, it is possible to avoid large-sizing of the equipment or cost up. Here, the necessary treatment time changes depending on the contact efficiency between the raw material crystal particles to be treated and the humidified carbon dioxide gas or on the amount of soda ash component on surfaces of the raw material crystal particles.

The temperature of the raw material crystal particles during the treatment can be adjusted by heating the humidified carbon dioxide gas and carrying out direct heat exchange with the gas. As an alternative, if the treatment equipment is a rotary dryer type, the temperature can be adjusted by indirect heat exchange with the wall of the equipment or a multitube type heat exchanger inside the equipment.

The humidified carbon dioxide gas is preferably circulated after it is supplied to the treatment equipment, so that it can be used repeatedly. In this case, it is preferred to provide temperature control means or humidity control means in the circulation path for circulating the humidified carbon dioxide gas. The circulation path may further be provided with a gas discharge path and/or gas supply path. Such discharge or supply is used for adjusting the pressure or the gas composition. When e.g. moisture or nitrogen gas accompanied with the raw material crystal particles to be treated is accumulated in the circulation path, gas discharge is carried out. Through the gas supply path, e.g. carbon dioxide gas or water vapor are supplied. As the temperature control means, a heat exchanger may, for example, be used. The humidity control means is a dehumidifier and/or a humidifier. Depending on the water content of raw material crystal particles supplied to the treatment equipment or on the amount or composition of the supplied gas or the discharged gas, a dehumidifier or a humidifier is used to carry out humidity control.

In the bicarbonation treatment, by adjusting the treatment conditions so as to suppress discharge of circulation gas, consumption of the carbon dioxide gas can be reduced, and the utilization ratio of the carbon dioxide gas in the reaction of changing soda ash component on surfaces of the raw material crystal particles to sodium hydrogen carbonate, can be increased.

(Drying treatment)

For the drying treatment, a cylindrical cooling apparatus having a paddle mixer and an indirect cooling jacket; a cylindrical cooling apparatus having a cooling disk; a flowing layer; a rotary dryer; or a flush dryer, etc. may be suitably used.

The drying treatment is carried out at a temperature of preferably from 30 to 95°C, more preferably from 40 to 85°C. In the drying treatment, the raw material crystal particles after the bicarbonation treatment are made contact with a dry carbon dioxide gas (the dry carbon dioxide gas is flown through the raw material crystal particles). By this drying treatment, dry sodium hydrogencarbonate crystal particles are obtained. The dry carbon dioxide gas preferably has a water vapor partial pressure of at most 0.9 kPa, and a carbon dioxide gas partial pressure of from 0.05 to 0.5 MPa.

The water vapor pressure 0.9 kPa corresponds to a dew point of 5°C. The water vapor partial pressure is more preferably at most 0.6 kPa (dew point of 0°C).

In terms of dryness of the carbon dioxide gas, the gas preferably has a dew point of at most 5°C (0.9 kPa in water vapor partial pressure), more preferably at most 0°C (0.6 kPa in water vapor partial pressure). As the water vapor partial pressure is lower, the drying efficiency is higher.

The lower the water vapor partial pressure, the better. When the water vapor partial pressure is low, shortening of drying treatment time or downsizing of equipment can be achieved. Further, the humidity of gases accompanying the sodium hydrogencarbonate crystal particles after drying, decreases, caking of the particles hardly occurs.

The lower limit of the carbon dioxide gas partial pressure is more preferably 0.06 MPa, further preferably 0.08 MPa. It is the most preferably at least 0.09 MPa. On the other hand, the upper limit is more preferably 0.3 MPa, further preferably 0.1 MPa.

As the carbon dioxide gas partial pressure is higher, decomposition in the drying step can be suppressed more easily. On the other hand, by controlling the carbon dioxide gas partial pressure to be not too high, it is possible to avoid cost up for modifying the treatment equipment or pipes connected with the treatment equipment to have higher withstanding pressure.

Into the dry carbon dioxide gas, another gas can be mixed so long as the gas does not react with sodium hydrogencarbonate. For example, an air, nitrogen or oxygen can be mixed. On the other hand, an acidic gas such as a hydrogen chloride gas or a sulfur oxide gas should not be mixed since they react with sodium hydrogencarbonate.

A dry carbon dioxide gas may also be used in circulation in the same manner as the humidified carbon dioxide gas for bicarbonation treatment. In this case, a dehumidifier, a cooling device or a heating device etc. may be appropriately provided in the circulation path for circulating the dry carbon dioxide gas.

(Cooling treatment)

Cooling treatment is preferably carried out simultaneously or subsequently to the drying treatment. Specifically, the cooling treatment lowers the temperature of the obtained sodium hydrogencarbonate crystal particles to preferably at most 50°C, more preferably at most 40°C, further preferably at most 35°C.

By lowering the temperature, decomposition of the sodium hydrogencarbonate crystal particles can be suppressed. Here, cooling to lower than 5°C is not preferred since it may cause dew condensation and such condensed water may adhere to the sodium hydrogencarbonate crystal particles.

As equipment for cooling, an indirect cooling type equipment such as a cylindrical cooling apparatus having a paddle mixer and an indirect cooling jacket; or a cylindrical cooling apparatus having a cooling disk; or a carbon dioxide gas flow type equipment such as a flowing layer, a rotary dryer or a flash dryer; may be suitably employed. These treatment equipments may be used in combination with the above-mentioned drying treatment equipment.

The dryness of the carbon dioxide gas to be used for cooling, is preferably at most 5°C in dew point (0.9 kPa in water vapor partial pressure), more preferably at most 0°C in dew point (0.6 kPa in water vapor partial pressure).

The carbon dioxide gas partial pressure is from 0.03 to 0.3 MPa. The lower limit of the carbon dioxide gas partial pressure is more preferably 0.06 MPa, further preferably 0.08 MPa. It is the most preferably 0.09 MPa. On the other hand, the upper limit is more preferably 0.2 MPa, further preferably 0.1 MPa.

As the carbon dioxide gas partial pressure is higher, decomposition in the cooling step can be suppressed more effectively. On the other hand, by making the carbon dioxide gas partial pressure to be not too high, it is possible to avoid cost up for modifying the treatment equipment or pipes connected with the treatment equipment to have higher withstanding pressure.

When the raw material crystal particles are cooled by flowing carbon dioxide through the raw material crystal particles, it is preferred to use the carbon dioxide gas in circulation in the same manner as the humidified carbon dioxide gas for the bicarbonation treatment. In this case, a dehumidifier or a cooling device etc. can be appropriately provided in the circulation path for circulating the carbon dioxide gas.

By employing as cooling equipment a cylindrical cooling apparatus having a paddle mixer and an indirect cooling jacket or a cylindrical cooling apparatus having a cooling disk, that are of indirect cooling type, the sodium hydrogencarbonate crystal particles can be cooled by a coolant. In this case, the carbon dioxide gas is flown through to suppress decomposition during the cooling.

In the case of indirect cooling type, since consumption of carbon dioxide gas is little, there is no problem even if the gas is not circulated.

The sodium hydrogencarbonate crystal particles after the drying and cooling treatments are subsequently classified by e.g. screening in most cases, and pulverized in many cases. In these steps, a carbon dioxide gas is preferably blown into equipment so as to form a carbon dioxide gas atmosphere. This is to avoid decomposition of sodium hydrogencarbonate on surfaces of the sodium hydrogencarbonate crystal particles as much as possible.

(Preservation)

The high purity sodium hydrogencarbonate crystal particles produced in the above process, are preferably airtightly sealed and packed with carbon dioxide gas immediately. This is to avoid decomposition of sodium hydrogencarbonate on surfaces of the sodium hydrogencarbonate crystal particles as much as possible.

In a case of temporarily storing them in a storage tank, it is preferred to blow carbon dioxide gas into the storage tank to form a carbon dioxide gas atmosphere similar to that for packaging. Carbon dioxide gas to be used for steps after the cooling step is preferably a gas equivalent to the dry carbon dioxide gas used for cooling. Namely, the carbon dioxide gas preferably has a dew point of at most 5°C (0.9 kPa in water vapor partial pressure), more preferably at dew point of at most 0°C (0.6 kPa in water vapor partial pressure).

Conventional sodium hydrogencarbonate crystal particles tend to be caked when they are preserved in a carbon dioxide gas atmosphere contrarily to the intention. This is considered to be because in the process in which slight amount of soda ash component present on surfaces of the sodium hydrogencarbonate crystal particles react with the carbon dioxide gas in the atmosphere to form sodium hydrogencarbonate, crosslinking is formed between the sodium hydrogencarbonate crystal particles.

On the other hand, the high purity sodium hydrogencarbonate crystal particles of the present invention can be preserved for a long time maintaining excellent anti-caking property and anti-thermal decomposition property, even under severe environment, by airtightly sealing them together with carbon dioxide gas with a packaging member to form an airtightly sealed package (hereinafter referred to as "sealed package"). This is considered to be because the reaction of transferring the sodium hydrogencarbonate to a soda ash component, is a reaction discharging carbon dioxide gas, and accordingly, by sealing them in a packing member together with carbon dioxide gas, such reaction is suppressed.

The packaging member for the sealed package is made of a material having a permeability of at most 50 mL/ $(m^2 \cdot 24h \cdot MPa)$ for carbon dioxide gas measured by a method according to JIS K7126-1987. Thus by employing the barrier material having low permeability for carbon dioxide gas, the carbon dioxide gas can be retained in the packaging member for long time.

The material for packaging member is constituted by a barrier layer having a permeability of at most 50 mL/ $(m^2 \cdot 24h \cdot MPa)$ for carbon dioxide gas, or a lamination sheet as a lamination of this barrier layer and another layer. The permeability for carbon dioxide gas is more preferably at most 30 mL/$(m^2 \cdot 24h \cdot MPa)$, further preferably at most 20 mL/ $(m^2 \cdot 24h \cdot MPa)$.

Most of gas permeability measurement data is with respect to oxygen in general. In a case of selecting the material from materials for which only oxygen gas permeability is available, selection may be made considering that the permeability for carbon dioxide gas is from 3 to 6 times as large as the permeability for oxygen gas.

The shape of the packaging member may be a bag shape, a standing bag shape, a cube shape, a bottle shape or the like.

The barrier layer may, for example, be a vapor deposition film produced by vapor deposition of alumina or silica on a resin substrate, an aluminum thin film, a vapor deposition film produced by vapor deposition of aluminum on a resin substrate, or a vinylidene chloride coating film. Among these, a vapor deposition film produced by vapor deposition of alumina or silica on a resin substrate, is preferred since it is transparent, it does not prevent use of a metal detector, and it produces no hydrogen chloride when it is burnt.

When an aluminum thin film or an aluminum vapor deposition film is used as a barrier layer, transparency can not be obtained. Further, aluminum in the barrier layer is detected by a metal detector, and the metal detector can not be used at a time of shipping a sodium hydrogencarbonate crystal particle product in the package, such being not preferred.

Further, when a vinylidene chloride coating film is used as a barrier layer, since it contains chorine, it produces hydrogen chloride gas at a time of burning the packing member, such being not preferred.

In order to vapor-deposit alumina or silica on a resin substrate, besides a CVD (chemical vapor deposition) method, a PVD (physical vapor deposition) method may also be used. As the CVD method, a plasma CVD method can be applied. As the PVD method, a vacuum vapor deposition method, an ion plating method or a sputtering method can be applied. The vacuum vapor deposition method includes a resistance heating method, an electron beam heating method and a high-frequency heating method that are different in heating method of vapor deposition source, and any one of these can be applied. Further, a dual vapor deposition method of silica and aluminum may also be applied.

The resin substrate for vapor-deposition of alumina or silica, may, for example, be a polyethylene terephthalate (PET) film, a biaxially oriented nylon (ON) film, a casted polypropylene (CPP) film, a low density polyethylene (LDPE) film.

Among these, it is particularly preferred to use a PET film or an ON film as the resin substrate. When a CP or a LDPE film is used as a resin substrate, although the barrier property decreases, a vapor deposition film based on such a film can be easily formed into a bag, such being advantageous in terms of cost.

The material of the innermost layer that is directly in contact with the sodium hydrogencarbonate crystal particles being a product, may, for example, be a linear low density polyethylene (LLDPE) film, a LDPE film or a CPP film. Among these, a LLDPE is preferred since it is excellent in heat seal strength.

The innermost film preferably does not contain e.g. an antioxidant so as not to change the quality or color of the sodium hydrogencarbonate crystal particles. Particularly, a LLDPE film containing completely no additive, is preferred.

Further, by using an ON film as an interlayer of the lamination sheet, strength against sticking can be improved.

A specific example of such lamination sheet may, for example, be a lamination sheet constituted by a barrier layer that is a PET film with vapor-deposition alumina or silica in its inner side, an ON film and a LLDPE film laminated in this order from the outside to the inside.

In this lamination sheet, the thickness of the PET film is preferably from 5 to 30 $\mu$m when the lamination sheet is used for a package of bag shape or a standing bag shape. The thickness of the ON film is preferably from 5 to 30 $\mu$m. The thickness of the LLDPE film is preferably from 30 to 150 $\mu$m.

The partial pressure of carbon dioxide gas sealed in the package is preferably from 0.2 to 0.1 MPa. The partial pressure is more preferably at least 0.05 MPa to exhibit the above effect can be more easily. Further, the reason of making the partial pressure to be at most 0.1 MPa is to avoid cost up for modifying the packing member to have higher withstanding pressure or for specializing a packing apparatus.

Further, a gas such as nitrogen or oxygen that does not react with sodium hydrogencarbonate, may be sealed in the package together with carbon dioxide gas, but in order to maintain high effect of suppressing decomposition of sodium hydrogencarbonate, it is preferred to mix no gas other than carbon dioxide gas as much as possible.

The dryness of the carbon dioxide gas sealed in the package is preferably equivalent to that of the dry carbon dioxide gas to be used for cooling. Namely, the carbon dioxide gas preferably has a dew point of at most 5°C (0.9 kPa in water vapor partial pressure), more preferably a dew point of at most 0°C (0.6 kPa in water vapor partial pressure).

EXAMPLES

[Measurement of water content]

The water content of the following samples 1 to 5 and the water content of "sodium hydrogencarbonate KF" as a product name of sodium hydrogencarbonate crystal particles manufactured by Asahi Glass Company, Limited as the raw material of sample 1 (hereinafter samples 1 to 5 and the sodium hydrogencarbonate KF are generally referred to as "sample"), were measured by a "desiccator method". Namely, into a flat weighing bottle that is dried, naturally cooled and weighed accurately in the order of 0.1 mg, about 10 g of each sample was put and their total mass was accurately weighed in the order of 0.1 mg, they were left in a silica gel desiccator for 4 hours in a state that the cap of the flat weighing bottle was open, and their total mass was accurately weighed in the order of 0.1 mg. The difference between their total masses before and after leaving them in the desiccator, was divided by the mass of the sample after it was left in the desiccator, to obtain the water content.

[Measurement of average particle size]

The average particle size of a sample was, as described above, measured by using a low tap screening machine and the screening method according to JIS Z8801-1.

[Measurement of amount of soda ash component]

The amount of soda ash component in a sample is measured by anhydrous methanol extraction method. The anhydrous methanol extraction method is specifically carried out as follows.

5 g of sodium hydrogencarbonate crystal particles are weighed, they are put in 100 mL of anhydrous methanol and shook for 30 min. An extracted liquid obtained was subjected to neutralization titration using a chloric acid having a concentration of 0.1 N and phenolphthalein as an indicator. Here, the hydrochloric acid of 0.1 N to be used for the titration is preferably an anhydrous methanol solution of hydrochloride or a 35 mass% aqueous solution of hydrochloric acid, that is further diluted by anhydrous methanol to have 0.1 N concentration, in order to reduce intermixture of water as much as possible. In the measurement of soda ash component by this anhydrous methanol extraction method, soda ash component amount is expressed as it is converted to the amount of sodium carbonate anhydride.

The amount of soda ash component other than Wegsheider's salt, measured by this anhydrous methanol extraction method, is hereinafter referred to as "soda ash component amount".

[Coloration according to PP method]

With respect to samples 1, 2 and 5, coloration according to PP method was tested. Namely, 10 g of a sample was put on a glass plate so as to form a cone shape, the top portion was squashed by a spatula to form a flat portion of 2 cm in diameter on the top. On the flat portion, 1 droplet of PP solution was dropped by using a pipette, and 1 sec after the dropping, the color tone was observed. With respect to sample 1, its color tone was observed also at 2 sec, 5 sec and 10 sec after the dropping.

In each observation of color tone, comparison was made with a color sample "Color Fan" published by GE Kikaku Center Inc. (published on February 27, 2000, ISBN4-921062-03-X). Further, with respect to sample 1, comparison was made with a sample on which 1 droplet of pure water instead of PP solution was dropped by a pipette.

Here, the PP solution was prepared by mixing 1.0 g of phenolphthalein powder of special grade chemical (Kanto Kagaku, min. 98.0%), 54.2 g of ethanol of special grade chemical and 31.9 g of purified water. Accordingly, its composition became 1.15 mass% of phenolphthalein, 62.23 mass% of ethyl alcohol and 36.62 mass% of water.

[Sample 1]

On a rotary evaporator R-200 manufactured by Shibata Scientific Technology Ltd., an eggplant-shaped flask of 3 liter (maximum outer diameter 155 mm) was placed, so that the bottom portion of the eggplant-shaped flask was immersed in a heating bath to be heated or cooled.

Into the eggplant-shaped flask, 1 kg of sodium hydrogencarbonate KF manufactured by Asahi Glass Company, Limited was put. The water content of the sodium hydrogencarbonate KF was 0.00 mass%, its average particle size was 103 $\mu$m, and the soda ash component amount according to anhydrous methanol extraction method was 0.07 mass%.

In a state that the eggplant-shaped flask was immersed in a heating bath at 80°C, while the eggplant-shaped flask was rotated at 30 rpm (30 revolutions per minute) to stir sodium hydrogencarbonate crystal particles inside, a humidified carbon dioxide gas was blown from a tube of 3 mm inner diameter made of PTFE that was inserted into the eggplant-shaped flask so that its end was at 12 cm above the bottom of the eggplant-shaped flask, to carry out a treatment of contacting the humidified carbon dioxide gas with the sodium hydrogencarbonate KF (bicarbonation treatment) for 5 hours.

As the humidified carbon dioxide gas to be used for bicarbonation treatment, a 100 vol% carbon dioxide gas in a carbon dioxide gas cylinder was supplied at 2 liter per min, it was flown through purified water heated at 60°C to be humidified and heated to use.

During the treatment, the temperature of the sodium hydrogencarbonate crystal particles in the eggplant-shaped flask was measured by a thermocouple type thermometer, and as a result, it was 75°C. The relative humidity of the humidified carbon dioxide gas was 52% at 75°C being the temperature of sodium hydrogencarbonate crystal particles. Further, the partial pressure of carbon dioxide in the humidified carbon dioxide gas was 0.08 MPa. Since this operation was carried out under an atmospheric pressure, the total pressure was 0.1 MPa. Namely, 0.02 MPa as a reminder of the total pressure subtracted by the carbon dioxide partial pressure is the water vapor partial pressure.

Then, in a state that the eggplant-shaped flask was immersed in a heating bath at 80°C, while the egg plant-shaped flask was rotated at 30 rpm (30 revolutions per minute) to stir sodium hydrogencarbonate crystal particles inside, a dry carbon dioxide gas was blown from a tube of 3 mm inner diameter made of PTFE that was inserted into the eggplant-shaped flask so that its end was at 12 cm above the bottom of the egg plant-shaped flask, to carry out a treatment of contacting the dry carbon dioxide gas with the sodium hydrogencarbonate KF (drying treatment) for 1 hour.

As the dry carbon dioxide gas, a 100 vol% carbon dioxide gas in a carbon dioxide gas cylinder was supplied at 2 liter per min and used as it was. The dew point of the carbon dioxide gas was -76°C.

During the treatment, the temperature of the sodium hydrogencarbonate crystal particles in the eggplant-shaped flask was measured by a thermocouple type thermometer, and as a result, it was maintained to be 75°C. The carbon dioxide gas partial pressure in the dry gas was 0.1 MPa since the operation was carried out under an atmospheric pressure and the carbon dioxide gas concentration was 100%.

Then, in a state that the eggplant-shaped flask was immersed in a heating bath at 30°C, while the eggplant-shaped flask was rotated at 30 rpm (30 revolutions per minute) to stir sodium hydrogencarbonate crystal particles inside, a dry carbon dioxide gas was blown from a tube of 3 mm in a diameter made of PTFE that was inserted into the eggplant-shaped flask so that its end was at 12 cm above the bottom of the egg plant-shaped flask, to carry out a treatment of contacting the dry carbon dioxide gas with the sodium hydrogencarbonate (cooling treatment) for 30 min, to obtain sample 1.

As the dry carbon dioxide gas for the cooling treatment, also a 100 vol% carbon dioxide gas in a carbon dioxide gas cylinder was supplied at 2 liter per min and used as it was. The dew point of the carbon dioxide gas was -76°C.

At the end of treatment, the temperature of the sodium hydrogencarbonate crystal particles in the eggplant-shaped flask was measured by a thermocouple type thermometer, and as a result, it was 29°C. The partial pressure of carbon dioxide in the dry carbon dioxide gas was 0.1 MPa since the operation was carried out under the atmospheric pressure and the carbon dioxide gas concentration was 100%.

The water content in sample 1 obtained, was 0.00 mass% according to desiccator method, the average particle size was 103 $\mu$m according to screening method, and the soda ash component amount was less than 0.01 mass% according to anhydrous methanol extraction method. Results of coloring by PP method was such that the color tone was thinner than the color No. 601 at each of 1 sec, 2 sec, 5 sec and 10 sec after the dropping. Further, in a case of dropping purified water, the color tones at 1 sec, 2 sec, 5 sec and 10 sec after the dropping were the so similar that no difference was recognized by visual observation, and substantially no coloration was observed.

The color tone of sample 1, 1 sec after the dropping according to PP method was thinner than the color No. 601 of the above color sample "Color Fan" (R=255, G=242 and B=255 in RGB 256 tone notation), which satisfies the criteria that R=245 to 255, G=243 to 245 and B=245 to 255, and accordingly, it corresponds to the sodium hydrogencarbonate crystal particles of the present invention. With respect to the color tone, it was thinner than a color tone of C=0, M=5 and Y=0 in terms of process color value, namely, its M was less than 5. Further, the color tone was thinner than a color tone of R=FF, G=F2 and B=FF in hexadecimal expression, namely, its G was more than F3.

Color tones at 2 sec, 5 sec and 10 sec were all equivalent to the color tone at 1 sec after the dropping. As the elapsed time becomes longer, the sample tends to be colored by phenolphthalein, but the sample 1 according to the present invention was not colored at 2 sec, 5 sec and 10 sec after the dropping of phenolphthalein, which indicates that the surfaces of sodium hydrogencarbonate crystal particles were made of sodium hydrogencarbonate.

[Sample 2]

Sample 2 was obtained by spreading sample 1 thinly in a stainless steel vat and placing them still in a box-shaped dryer at 100°C for 5 min.

The analysis and measurement methods were the same as those of sample 1.

The water content of sample 2 obtained was 0.00 mass%, its average particle size was 87 $\mu$m, and its soda ash component amount was 0.00 mass%. The result of coloration by PP method was such that the color tone 1 sec after the dropping was equivalent to the color No. 602 of the color sample "Color Fan".

Sample 2 has a soda ash component amount of 0.00 mass% according to anhydrous methanol extraction method, but its color tone 1 sec after dropping according to PP method was equivalent to the color No. 602 (R=255, G=230 and B=255 in RGB 256 tone notation) that is thicker than the color No. 601 of the above color sample "Color Fan", and accordingly, the sample does not satisfy the value of G in the criteria that R=245 to 255, G=243 to 255 and B=245 to 255, and the sample 2 does not correspond to the sodium hydrogencarbonate crystal particles of the present invention. With respect to the color tone, it was equivalent to the color tone of C=0, M=10 and Y=0 in process color value, namely, its M was more than 5. It corresponds to a color tone of R=FF, G=E6 and B=FF in hexadecimal expression in terms of hexadecimal values for HTML, namely, its G was less than F2.

[Sample 3]

Sample 3 was "sodium hydrogencarbonate KF" manufactured by Asahi Glass Company, Limited, but it was produced in a production lot different from that of sample 1.

The water content of sample 3 was 0.00 mass%, its average particle size was 109 $\mu$m and its soda ash component amount was 0.09 mass%.

Sample 3 has a soda ash component amount of 0.09 mass% according to anhydrous methanol extraction method, and contains large amount of soda ash component on surfaces of sodium hydrogencarbonate crystal particles, and thus, it does not correspond to the sodium hydrogencarbonate crystal particles of the present invention.

Further, its color tone 1 sec after the dropping according to PP method corresponds to a color No. 609 (R=255, G=51 and B=255 in RGB 256 tone notation) that is thicker than the color No. 601 of the above color sample "Color Fan", and it does not satisfy the value of G in the criteria that R=245 to 255, G=243 to 255 and B=245 to 255, and accordingly, it does not correspond to the sodium hydrogencarbonate crystal particles of the present invention. With respect to the color tone, it corresponds to the color tone of C=0, M=80 and Y=0 in process color value, and thus, its M is more than 5. It corresponds to a color tone of R=FF, G=33 and B=FF in hexadecimal expression in terms of hexadecimal value for HTML, and thus, its G is less than F2.

[Sample 4]

Sample 4 was obtained by thinly spreading sample 3 in a stainless steel vat, and placing them still in a box-shaped dryer at 100°C for 5 min.

The water content of sample 4 was 0.00 mass%, its average particle size was 94 $\mu$m, its soda ash component amount was 0.20 mass% according to anhydrous methanol extraction method.

Further, its color tone 1 sec after dropping according to PP method corresponded to the color No. 611 (R=255, G=0 and B=255 in RGB 256 tone notation) that is thicker than the color No. 601 of the above color sample "Color Fan", and it does not satisfy G value in the criteria that R=245 to 255, G=243 to 255 and B=245 to 255, and accordingly, sample 4 does not correspond to the sodium hydrogencarbonate crystal particles of the present invention. With respect to the color tone, it was equivalent to a color tone of C=0, M=100 and Y=0 in process color value, and accordingly, its M is more than 5. It corresponds to a color tone of R=FF, G=00 and B=FF in hexadecimal expression in terms of hexadecimal values for HTML, and accordingly, its G is less than F2.

[Sample 5]

Sample 5 is "sodium hydrogencarbonate KF" manufactured by Asahi Glass Company, Limited, but it was produced in a production lot different from those of sample 1 and sample 3.

The water content of sample 5 was 0.00 mass%, its average particle size was 120 $\mu$m and its soda ash component amount was 0.08 mass%. Coloration 1 sec after dropping according to PP method corresponded to color No. 608 that is thicker than the color No. 601 of the above color sample "Color Fan".

Sample 5 has a soda ash component amount of 0.08 mass% according to anhydrous methanol extraction method, and its color tone after 1 sec according to PP method corresponded to the color No. 608 (R=255, G=77 and B=255 according to RGB 256 tone notation) and its G value does not satisfy the criteria that R=245 to 255, G=243 to 255 and B=245 to 255, and accordingly, sample 5 does not correspond to the sodium hydrogencarbonate crystal particles of the present invention.

With respect to the color tone, it is equivalent to a color tone of C=0, M=70 and Y=0 in process color value, and accordingly, its M is more than 5. The color tone corresponds to a color tone of R=FF, G=4D and B=FF in hexadecimal expression in terms of hexadecimal values for HTML, namely, its G is less than F2.

[Evaluation of caking property]

Caking properties of sample 1, sample 2 and sample 5 were evaluated by "two-division cell method". For the two-division cell method, Cohetester (model CT-2) manufactured by Hosokawa Micron Corporation was employed. The two-division cell has a cylindrical shape having a closed bottom and open top (cup shape) and the bottom shape is configured to be dividable into two cells. The two-division cell is configured so that one of the cells is fixed, the other cell is slidable in horizontal direction to be separated from the other cell, and the tension required for the separation can be measured. By this construction, the breaking tension to break (two-division) a powder layer put in the cell (into two pieces) can be measured. Since it is possible to calculate adhesive power per contact point between sodium hydrogencarbonate crystal particles from this tensile breaking force, caking due to adhesion between crystal particles can be extremely quantitatively evaluated.

The Cohetester manufactured by Hosokawa Micron Corporation is described in Funryutai Keisoku Handbook (Japan Particles Industry Association, published by Nikkan Kogyo Shimbun Ltd., p. 197 to 199, published on May 10, 1981).

In terms of the procedure of measurement, first of all, a sample to be put in the two-division cell is weighed. Appropriate mass of the sample to be filled in the two-division cell is researched in advance, and the sample is weighed to be approximately to the mass. The sample was put in the two-division cell having an inner diameter of 5 cm and a height of 2 cm, a cylindrical weight of 962.7 g having a flat and smooth bottom surface was placed on the upper surface of the sample layer in the two-division cell (opening portion of two-division cell) (preliminary compression load 49.05 g/cm$^2$), and they are placed still under the conditions of 23°C and a relative humidity of 80% for 24 hours.

After they were placed still, the cylindrical weight placed on the two-division cell was removed, and the packed height of the particle layer of the sample was measured to obtain the packed bulk density. Further, from the packed bulk density, the porosity $\varepsilon$ was calculated. In this calculation, the true density of the sodium hydrogencarbonate crystal particles was assumed to be 2.22 g/cm$^3$.

Then, a cell in the two-division cell that is not fixed was pulled to separate the two-division cell together with the sample particle layer, and the breaking tension for the separation was measured. The sectional area formed by the separation of two-division cell was calculated from the diameter 5 cm of the cell and the packed height of the sample particle layer, and divide the breaking tension by this sectional area to obtain the tensile strength $\sigma_Z$ of the sample. Further, according to formula (3) below, an adhesive force H per contact point was obtained. Table 1 shows these results.

Formula (3) is obtained in the following manner. First of all, among tensile strength $\sigma_Z$(mN/cm$^2$), porosity $\varepsilon$ (-), the number of contact point per single particle, that is, valency k(-), adhesive force per contact point H(mN) and average particle size d(cm), the following formula (1) is satisfied.

$$\sigma_Z = (1-\varepsilon)(k)(H)/((\pi)(d^2)) \qquad\qquad \text{Formula (1)}$$

The above Formula (1) can be obtained from the method of Rumpf disclosed in H Rumpf, Agglomeration, p. 379 to 417; Interscience, New York, (1962); and Chemie-Ing.-Techn. 42. Jahrg. 1970/Nr. 8, p. 538 (1970).

Further, these documents disclose the following formula (2).

$$k\varepsilon \doteqdot 3.1 \doteqdot \pi \qquad \text{Formula (2)}$$

By assigning the relationship of Formula (2) in Formula (1), Formula (3) is obtained, and from the tensile strength $\sigma_Z$, the porosity $\varepsilon$ and the average particle size d of the sodium hydrogencarbonate crystal particles, an adhesive force H(mN) per contact point of sodium hydrogencarbonate crystal particles, can be obtained.

$$\sigma_Z \doteqdot (1-\varepsilon)(H)/((\varepsilon)(d^2)) \qquad \text{Formula (3)}$$

TABLE 1

| Sample No. | Loading amount in the cell (g) | Packing bulk density (g/cm$^3$) | Porosity $\varepsilon$ (-) | Breaking tension (mN) | Tensile strength $\sigma_Z$ (mN/cm$^2$) | Adhesive force per contact point H ($\mu$N) |
|---|---|---|---|---|---|---|
| 1 | 28.36 | 1.032 | 0.535 | 17 | 2.4 | 0.3 |
| 2 | 33.51 | 1.067 | 0.519 | 888 | 111 | 9.1 |
| 3 | 33.00 | 1.121 | 0.495 | 673 | 89.7 | 12.7 |

Table 1 shows that the sample 1 being an example of the present invention has extremely low adhesive force per contact point, and accordingly, it is excellent in anti-caking property. On the other hand, sample 2 has a soda ash component amount of less than 0.01 mass% according to anhydrous methanol extraction method, but its adhesive force per contact point was close to that of sample 5. Here, the unit of adhesive force per contact point is mN in Formula (3), but it is converted to $\mu$N in Table 1.

From these results, it is understood that the anti-caking property can be improved by removing extremely small amount of soda ash component that is not detectable without PP method.

[Evaluation of thermal decomposition property]

The high purity sodium hydrogencarbonate crystal particles (sample 1) of the present invention is excellent also in anti-thermal decomposition property. As described below, by thermogravimetry, thermal decomposition properties of samples 1 to 4 were evaluated.

Thermogravimetry is a method of changing the temperature of a sample according to a predetermined program, and measuring the mass reduction ratio of the sample continuously as a function of temperature or time, whereby information regarding the start and end of decomposition and mass reduction caused by decomposition, can be obtained.

In thermogravimetry, mass change is measured by an extremely high sensitivity scale, and high precision measurement is possible. Further, since the thermal capacity of a sample holder for putting a sample is small, and since the mass of sample required for measurement is small, spots due to decomposition caused by heating scarcely occur and reproducibility of measurement is high.

In this example, as a thermogravimetry analyzer, a thermogravimetric differential thermal analyzer TG/DTA 6200 manufactured by SII Nano Technologies Inc. was used.

First of all, 60 mg of a sample was weighed, and it was put in a sample pan being a sample container made of platinum, a cap was put on the pan and it was immediately sealed by using a sample sealer. Then, just before measurement, the cap was perforated and the pan was set on a sample holder of the thermogravity analyzer. By this method, quality change of the sample due to e.g. moisture absorption can be prevented. As a reference material of weight, a sapphire formed into a pellet shape was used, and as an atmospheric gas, dry nitrogen gas (flow rate 50 mL/min) was used.

The temperature of the sample was raised at 1.0°C per minute, and the mass reduction ratio [mass reduction TG (%)] due to its thermal decomposition was measured. Fig. 1 shows the results.

As shown in Fig. 1, it was understood that with respect to sample 1 being an example of the present invention, its decomposition start temperature is high and its decomposition speed is low. On the other hand, in the case of sample 2, its soda ash component amount was less than 0.01 mass% according to anhydrous methanol extraction method, but as compared with sample 1, the decomposition start temperature was lower and decomposition speed was higher. Further, as understandable from the comparison of samples 2 to 4, as the soda ash component amount is higher, the decomposition start temperature is lower and the decomposition speed is higher.

From these results, it was understood that the high purity sodium hydrogencarbonate crystal particles of the present invention have high anti-thermal decomposition property.

Further, the order of samples in easiness of decomposition and the order of samples in the thickness of coloring according to PP method, conform with each other.

The inventors presume that a slight amount of soda ash component not measurable by anhydrous methanol extraction method, on surfaces of sodium hydrogen chloride crystal particles, promotes thermal decomposition. Further, they presume that since the high purity sodium hydrogencarbonate crystal particles of the present invention are complete crystals, they do not easily undergo thermal decomposition. Further, it has become clear that even an extremely small amount of soda ash component not detectable by anhydrous methanol extraction method, can be detected by PP method, and such slight amount of soda ash component present on the sodium hydrogencarbonate crystal particles promotes thermal decomposition of the sodium hydrogencarbonate crystal particles.

[Package of sodium hydrogencarbonate crystal particles]

A packing member for preserving the high purity podium hydrogencarbonate crystal particles of the present invention in good condition, was investigated.

EXAMPLE

A lamination member constituted by a PET film of 12 $\mu$m thick provided with an alumina transparent vapor deposition layer formed by PVD method so that the vapor deposition layer is positioned inside, an ON film of 15 $\mu$m as an interlayer, and a LLDPE film of 70 $\mu$m thick containing completely no additive as the innermost layer contacting with sodium hydrogencarbonate crystal particles, that are dry-laminated in this order, was employed as the packing material of this Example.

The permeability of this packing material for carbon dioxide gas was 15 mL/ ($m^2$·24H·MPa) according to a method of JIS K7126-1987. A bag of 200 mm high and 300 mm wide was prepared with the packing material.

1 kg of sample 1 was weighed and put in the bag while dry carbon dioxide gas from the above carbon dioxide gas bottle was blown into the bottom portion of the bag, and the bag was sealed by a heat seal. This bag with sample 1 was placed still in an environment of 25°C and relative humidity of 85% for 1 month.

COMPARATIVE EXAMPLE

A packing bag made of LLDPE film of 120 $\mu$m thick containing completely no additive, was used as a packing material of Comparative Example. The permeability of the packing material for carbon dioxide gas was 880 mL/($m^2$·24H·MPa) according to the method of JIS K7126-1987. A bag of 200 mm high and 300 mm wide was prepared with the packing material.

1 kg of sample 1 was weighed and put into the bag while dry carbon dioxide gas was blown into bottom portion of the bag, and the bag was sealed by a heat seal. The bag with sample 1 was placed still in an atmosphere of 25°C and relative humidity of 85% for 1 month.

RESULTS

In the Example, no occurrence of caking was observed in the sample after the preservation. On the other hand, in the Comparative Example, carbon dioxide gas permeated through the LLDPE film to the outside of the bag, and the package state became similar to that of vacuum packing, and as a result, 10% of sample 1 was agglomerated. Here, there was no coloration such as yellowing due to packing material in each sample.

From these results, it has become clear that by using a packing member having low permeability for carbon dioxide gas, and sealing the high purity sodium hydrogencarbonate crystal particles of the present invention together with carbon dioxide gas, it is possible to preserve the particles in a state of excellent anti-caking property.

INDUSTRIAL APPLICABILITY

Since the sodium hydrogencarbonate of the present invention has extremely high purity, it is applicable to an application requiring high purity of sodium hydrogencarbonate such as medical use or semiconductor industries.

The entire disclosure of Japanese Patent Application No. 2006-71191 filed on March 15, 2006 including specification, claims, drawings and summary is incorporated herein by reference in its entirety.

**Claims**

1. High purity sodium hydrogencarbonate crystal particles **characterized in that** coloration of the particles does not occur for 1 second after drop of a phenolphthalein solution consisting of 1.15 mass% of phenolphthalein, 62.23 mass% of ethyl alcohol and 36.62 mass% of water, due to color change of phenolphthalein.

2. High purity sodium hydrogencarbonate crystal particles **characterized in that** their color after 1 second after dropping of a phenolphthalein solution consisting of 1.15 mass% of phenolphthalein, 62.23 mass% of ethyl alcohol and 36.62 mass% of water, is R=245 to 255, G=243 to 255 and B=245 to 255 in RGB 256 tone notation.

3. A process for producing high purity sodium hydrogencarbonate crystal particles, comprising a step of contacting sodium hydrogencarbonate crystal particles in a state that they are heated at a temperature of from 40 to 95°C with humidified carbon dioxide gas having a relative humidity of from 5 to 95% and a carbon dioxide gas partial pressure of from 0.05 to 0.5 MPa at the temperature to carry out bicarbonation treatment of the sodium hydrogencarbonate crystal particles.

4. The process for producing high purity sodium hydrogencarbonate crystal particles according to Claim 3, which further comprises after the bicarbonation treatment, a step of contacting the particles with dry carbon dioxide gas having a water vapor partial pressure of at most 0.9 kPa and a carbon dioxide gas partial pressure of from 0.05 to 0.5 MPa to carry out drying treatment.

## Fig. 1

**EP 1 997 780 A1**

<table>
<tr><td colspan="2"><b>INTERNATIONAL SEARCH REPORT</b></td><td>International application No.<br>PCT/JP2007/051646</td></tr>
</table>

**A. CLASSIFICATION OF SUBJECT MATTER**
*C01D7/42(2006.01)i*

According to International Patent Classification (IPC) or to both national classification and IPC

**B. FIELDS SEARCHED**

Minimum documentation searched (classification system followed by classification symbols)
C01D7/42

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2006/004003 A1 (Asahi Glass Co., Ltd.),<br>12 January, 2006 (12.01.06),<br>Claims; Par. Nos. [0027] to [0032]; examples;<br>table 3; Fig. 1<br>& EP 1770066 A1 | 1-4 |
| A | JP 2003-104722 A (Tosoh Corp.),<br>09 April, 2003 (09.04.03),<br>Claims; examples<br>(Family: none) | 1-4 |
| A | JP 2-275714 A (Kao Corp.),<br>09 November, 1990 (09.11.90),<br>Claims; examples<br>& DE 69012593 C | 1-4 |

☐ Further documents are listed in the continuation of Box C.       ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 April, 2007 (23.04.07) | Date of mailing of the international search report<br>15 May, 2007 (15.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003104722 A
- JP 2006071191 A

**Non-patent literature cited in the description**

- Color Fan. GE Kikaku Center Inc, 27 February 2000
- **TAKEO OZAWA.** A New Method of Analyzing Thermogravimetric Data. *Bull. Chem. Soc. Japan,* 1965, vol. 38, 1881
- Soda Handbook. Japan Soda Industry Association, 30 January 1975, 105-106
- MANUFACTURE OF SODA. Manufacture of Refined Sodium Bicarbonate. Reinhold Publishing, 1942, 282
- Funryutai Keisoku Handbook. Nikkan Kogyo Shimbun Ltd, 10 May 1981, 197-199
- **H RUMPF.** Agglomeration. Interscience, 1962, 379-417
- *Chemie-Ing.-Techn. 42. Jahrg.,* 1970, vol. 1970 (8), 538